# EUROPEAN PATENT APPLICATION

(11) **EP 4 538 312 A1**
(43) Date of publication of application: **16.04.2025**
(21) Application number: 23823882.8
(22) Date of filing: 12.06.2023
(51) Int. Cl.: C08G 64/30

(54) **POLYCARBONATE PRODUCTION METHOD, DIHYDROXY COMPOUND RECOVERY METHOD, AND POLYCARBONATE PRODUCTION APPARATUS**

(30) Priority: 13.06.2022 JP 2022094842
(71) Applicant: Asahi Kasei Kabushiki Kaisha, Tokyo 1000006 (JP)
(72) Inventor: HAYASHI, Fuminori, Tokyo 100-0006 (JP)
(74) Representative: Strehl & Partner mbB
(86) International application number: PCT/JP2023/021709
(87) International publication number: WO 2023/243592

(57) **Abstract**

A method for producing a polycarbonate, comprising
a polymerization step of polymerizing a dihydroxy compound and a diaryl carbonate, or a prepolymer thereof in a polymerization reactor,
a washing step of contacting a discharged vapor containing the hydroxyaryl compound, the diaryl carbonate and the dihydroxy compound, discharged from the polymerization reactor in the polymerization step, with a washing liquid in a scrubber, and
a condensation step of condensing the discharged vapor washed in the washing step, wherein
at least a portion of a bottom liquid of the scrubber in the washing step is supplied to the polymerization reactor.

## Description

### Technical Field

The present invention relates to a method for producing a polycarbonate, a method for recovering a dihydroxy compound, and an apparatus for producing a polycarbonate.

### Background Art

Polycarbonates are widely utilized as engineering plastics in electrical and electronic components, automobile components, or optical fields such as optical recording media or lenses, by means of superiority such as transparency, heat resistance or mechanical strength.

A representative polycarbonate production method is a transesterification method or a melting method. In such a method, polymerization progresses by transesterification between a dihydroxy compound typified by bisphenol A (BPA) and a diaryl carbonate typified by diphenyl carbonate (DPC) and removal of a hydroxyaryl compound as a by-product to the outside of the system.

There is proposed, as polycarbonate production, for example, a method with a polymerization reactor including a condenser, as shown in Patent Literature 1. In this method, a reduction in production cost and effective utilization of resources are achieved by condensation of a monohydroxy compound as a by-product with a condenser and thus recovery of the monohydroxy compound.

### Citation List

### Patent Literature

Patent Literature 1: Japanese Patent Laid-Open No. 2012-214801

### Summary of Invention

### Technical Problem

The method for producing a polycarbonate with a polymerization reactor including a condenser, shown in Patent Literature 1, in which a vapor of a hydroxyaryl compound as a by-product is discharged from the polymerization reactor to the outside of the system, has been considered to enable the vapor of a hydroxyaryl compound to be discharged to the outside of the system without any particular problem due to a large difference in boiling point between a dihydroxyaryl compound and a dihydroxy compound, but has been revealed to have room for improvement because, in fact, splashes of the dihydroxy compound as a reaction starting material are entrained by the vapor and thus introduced into the condenser, thereby causing the loss of the dihydroxy compound in the subsequent distillation and purification step.

An object of the present invention is to provide a method for producing a polycarbonate, a method for recovering a dihydroxy compound, and an apparatus for producing a polycarbonate, in which a dihydroxy compound can be recovered from a vapor discharged from a polymerization reactor to reduce the amount of loss of the dihydroxy compound.

### Solution to Problem

The present invention encompasses the following embodiments.
<1> A method for producing a polycarbonate, comprising
   a polymerization step of polymerizing a dihydroxy compound and a diaryl carbonate, or a prepolymer thereof in a polymerization reactor,
   a washing step of contacting a discharged vapor containing the hydroxyaryl compound, the diaryl carbonate and the dihydroxy compound, discharged from the polymerization reactor in the polymerization step, with a washing liquid in a scrubber, and
   a condensation step of condensing the discharged vapor washed in the washing step, wherein
   at least a portion of a bottom liquid of the scrubber in the washing step is supplied to the polymerization reactor.
<2> The method for producing a polycarbonate according to <1>, wherein at least a portion of a condensed liquid of the discharged vapor in the condensation step is used as the washing liquid in the washing step.
<3> The method for producing a polycarbonate according to <2>, wherein a mass ratio of a liquid supplied as the washing liquid toward the washing step, in the condensed liquid from the condensation step, is 0.1 or more and 1 or less based on an amount of the discharged vapor at an inlet for the washing step.
<4> The method for producing a polycarbonate according to any one of <1> to <3>, wherein the bottom liquid of the scrubber in the washing step is supplied as the washing liquid toward the washing step.
<5> The method for producing a polycarbonate according to <4>, wherein a mass ratio of a liquid supplied as the washing liquid toward the washing step, in the bottom liquid of the scrubber in the washing step, is 0.1 or more and 10 or less based on an amount of the discharged vapor at an inlet for the washing step.
<6> The method for producing a polycarbonate according to any one of <1> to <5>, wherein a content of the diaryl carbonate in the bottom liquid of the scrubber in the washing step is 20% by mass to 90% by mass.
<7> The method for producing a polycarbonate according to any one of <1> to <6>, wherein the scrubber in the washing step is provided with an irregular packing material.
<8> The method for producing a polycarbonate according to any one of <1> to <7>, wherein a droplet corresponding to a splash entrainment content is separated by a demister in the washing step.
<9> The method for producing a polycarbonate according to <8>, wherein a space ratio in the demister is 95% by volume to 99% by volume.
<10> The method for producing a polycarbonate according to any one of <1> to <9>, wherein the dihydroxy compound comprises diphenyl carbonate.
<11> The method for producing a polycarbonate according to any one of <1> to <10>, wherein the diaryl carbonate comprises bisphenol A.
<12> A method for recovering a dihydroxy compound, comprising
   a washing step of contacting a discharged vapor containing a hydroxyaryl compound, a diaryl carbonate and a dihydroxy compound, discharged from a polymerization reactor that polymerizes the dihydroxy compound and the diaryl carbonate, or any prepolymer thereof, with a washing liquid in a scrubber, and
   a condensation step of condensing the discharged vapor washed in the washing step.
<13> The method for recovering a dihydroxy compound according to <12>, wherein the dihydroxy compound comprises diphenyl carbonate.
<14> The method for recovering a dihydroxy compound according to <12> or <13>, wherein the diaryl carbonate comprises bisphenol A.
<15> An apparatus for producing a polycarbonate, comprising
   a polymerization reactor that polymerizes a dihydroxy compound and a diaryl carbonate, or a prepolymer thereof,
   a scrubber that brings a discharged vapor containing a hydroxyaryl compound, a diaryl carbonate and a dihydroxy compound, discharged from the polymerization reactor, into contact with a washing liquid, and
   a condenser that condenses the discharged vapor washed by the scrubber, and
   a supply path that allows at least a portion of a bottom liquid of the scrubber to be supplied to the polymerization reactor.

### Advantageous Effect of Invention

The present invention can provide a method for producing a polycarbonate, a method for recovering a dihydroxy compound, and an apparatus for producing a polycarbonate, in which a dihydroxy compound can be recovered from a vapor discharged from a polymerization reactor to reduce the amount of loss.

### Brief Description of Drawings

[Figure 1] Figure 1 is a schematic configuration diagram of an apparatus for producing a polycarbonate.
[Figure 2] Figure 2 is a schematic configuration diagram of an apparatus for producing a polycarbonate according to another embodiment.
[Figure 3] Figure 3 is a schematic configuration diagram of an apparatus for producing a polycarbonate, used in a comparative experiment.

### Description of Embodiments

Hereinafter, any mode for carrying out the present invention (hereinafter, referred to as "the present embodiment".) is described in detail. It is noted that the present embodiment described below is an example for describing the present invention and the present invention is not limited to the following embodiment. The present invention can be appropriately modified and carried out within the gist thereof. For example, the designation of a numerical value range of "1 to 100" herein encompasses both the lower limit value "1" and the upper limit value "100". The same also applies to the designation of any other numerical value range.

### [Method for producing polycarbonate]

A method for producing a polycarbonate according to the present embodiment includes
a polymerization step of polymerizing a dihydroxy compound and a diaryl carbonate, or a prepolymer thereof in a polymerization reactor,
a washing step of contacting a discharged vapor containing the hydroxyaryl compound, the diaryl carbonate and the dihydroxy compound, discharged from the polymerization reactor in the polymerization step, with a washing liquid in a scrubber, and
a condensation step of condensing the discharged vapor washed in the washing step, wherein
at least a portion of a bottom liquid of the scrubber in the washing step is supplied to the polymerization reactor.

The present embodiment can provide a method for producing a polycarbonate, a method for recovering a dihydroxy compound, and an apparatus for producing a polycarbonate, in which a dihydroxy compound can be recovered from a vapor discharged from a polymerization reactor to reduce the amount of loss.

In the present embodiment, the discharged vapor discharged from the polymerization reactor can be contacted with the washing liquid in the scrubber in the washing step, thereby allowing the dihydroxy compound in the discharged vapor to be recovered. The bottom liquid of the scrubber includes compounds relatively high in boiling point, for example, the diaryl carbonate, the dihydroxy compound, and the like contained in the discharged vapor. Therefore, at least a portion of the bottom liquid of the scrubber can be supplied to the polymerization reactor, thereby allowing the diaryl carbonate and the dihydroxy compound recovered to be used again in polymerization, and reducing the amount of loss of the dihydroxy compound.

### <Apparatus for producing polycarbonate>

An apparatus used in the method for producing a polycarbonate according to the present embodiment is described.

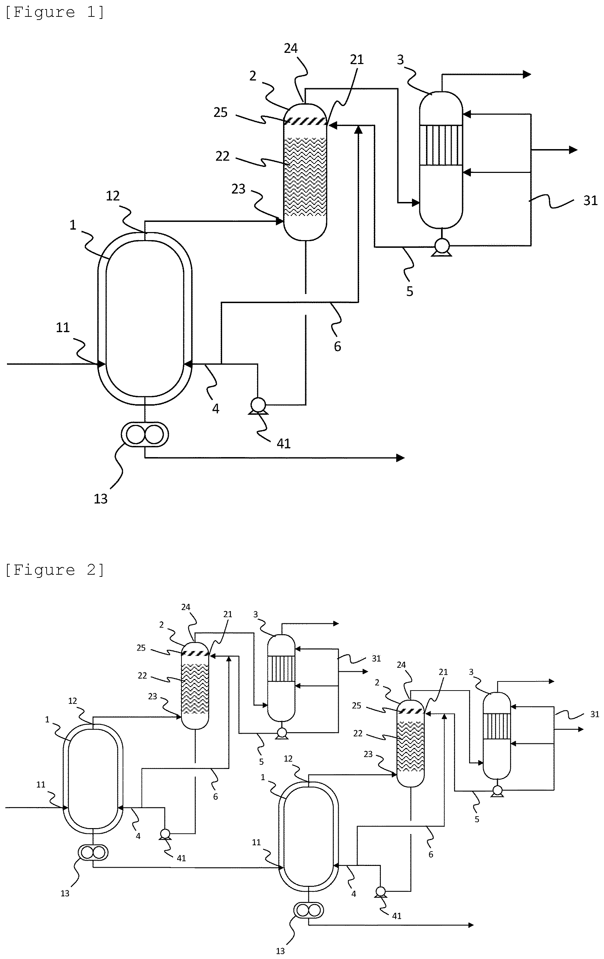

Figure 1 is a schematic configuration diagram of an apparatus for producing a polycarbonate. The apparatus for producing a polycarbonate has a polymerization reactor 1, a scrubber 2, a condenser 3, and a supply path 4.

The polymerization reactor 1 is for polymerization of a dihydroxy compound and a diaryl carbonate, or a prepolymer thereof. The polymerization reactor 1 may be a polymerization reactor having a large area for evaporating a hydroxyaryl compound produced according to progression of polymerization reaction. Examples of the polymerization reactor include a thin-film polymerization reactor, a centrifugal thin-film evaporation polymerization reactor, a surface renewal type twin-screw kneading polymerization reactor, a twin-screw horizontal stirring polymerization reactor, a wetted-wall type polymerization reactor, a perforated plate type polymerization reactor in which polymerization is made with free fall, a polymerization reactor in which a polymer is molten and dropped along with a support to allow polymerization to progress, and a perforated plate type polymerization reactor provided with a wire. These polymerization reactors may be used singly or in combinations of two or more kinds thereof. A polymerization process with the polymerization reactor may be any of batch and continuous systems.

The polymerization reactor here used may be a polymerization reactor provided with a stirring blade that directly stirs a liquid surface. The stirring blade that directly stirs a liquid surface means a stirring blade in which any other section than a stirring shaft of the stirring blade is present at a gas interface in the polymerization reactor. While the stirring blade is not necessarily needed to be present in the inside of a liquid other than a gas-liquid interface, use of such a stirring blade that stirs not only the gas-liquid interface, but also the inside of the liquid is a preferable aspect of the present embodiment. The shape of the stirring blade is not particularly limited and various types of stirring blades can be used, and, for example, a Pfaudler blade, an anchor blade, a turbine blade, a double helical blade, or a Maxblend type stirring blade is used. It has been revealed that the polymerization reactor provided with a stirring blade that directly stirs a liquid surface can be used to increase the polymerization rate and also suppress a foaming phenomenon in a polymerization tank. The reason for this is not clear, but it is presumed that the defoaming effect on bubbles present on a liquid surface is excellent. Such polymerization can be a batch type in which a molten mixture is fully loaded into the polymerization reactor and then polymerized, or a continuous type in which a molten mixture is continuously polymerized with being supplied.

The manner for heating the polymerization reactor is not particularly limited, a method involving heating with a jacket provided on the polymerization reactor, a method involving heating with an internal coil provided in the polymerization reactor, a method involving heating under circulation of a liquid with a heat exchanger provided outside the polymerization reactor, or the like is used, and the ratio of the heat-transfer area (m²) in heating to the liquid volume (m³) in the polymerization reactor is preferably in a range of 1 to 70 from the viewpoint of production of an uncolored and high-quality polycarbonate.

The polymerization reactor 1 has a supply port 11 through which a reaction starting material is supplied to the reactor. If the reaction starting material is reacted in the polymerization reactor 1, a vapor containing a hydroxyaryl compound is discharged from a discharged vapor port 12 to the outside of the system of the polymerization reactor 1. The vapor produced by reaction is supplied from the discharged vapor port 12 to the scrubber 2.

The polymerization reactor 1 has a discharge pump 13 that draws out a polycarbonate produced. The discharge pump 13 may be a gear pump that can quantitatively discharge a high-viscosity substance, and the material of such a gear may be stainless steel or any other special metal.

The scrubber 2 brings a discharged vapor containing a hydroxyaryl compound, a diaryl carbonate and a dihydroxy compound, discharged from the polymerization reactor 1, into contact with a washing liquid. The "scrubber" means an apparatus that brings a gas into contact with a liquid to separate a component in the gas.

The scrubber 2 has a spray port 21 of the washing liquid around the top portion thereof, and a packing material 22 at the lower portion thereof. The washing liquid introduced through the spray port 21 is sprayed in the scrubber, and supplied to the packing material 22. In this regard, the scrubber 2 has an introduction port 23 of the discharged vapor, at the bottom portion thereof. The discharged vapor introduced through the introduction port 23 is contacted with the washing liquid in the packing material 22, and the diaryl carbonate and the dihydroxy compound are separated from the discharged vapor. The scrubber 2 can be provided, thereby returning a substance higher in boiling point than an aromatic monohydroxy compound distilled out from the polymerization reactor, in particular, the dihydroxy compound to the polymerization reactor, resulting in a decrease in starting material loss. The discharged vapor is discharged in the scrubber 2, and then discharged through a discharged vapor port 24. The discharged vapor treated in the scrubber 2 is supplied through the discharged vapor port 24 to a flocculator 3.

The packing material here used may be a regular packing material or an irregular packing material, and is preferably an irregular packing material. Such a packing material is preferably, for example, a Raschig ring, a Lessing ring, a Pall ring, a Berl saddle, an Intalox saddle, a Dixon packing, a Mc Mahon packing, a Heli pack, a cascade mini ring, or a Rasching super ring.

The scrubber 2 may include a demister 25 above the spray port 21. The demister 25 is provided to separate a droplet corresponding to a splash entrainment content. The discharged vapor is contacted with the washing liquid and at the same time a fine particle of the liquid is generated, and this fine particle moves upward along with the discharged vapor. The demister, if disposed in a flow path, complicates the flow path of the discharged vapor, and thus the discharged vapor, which is light, threads through the demister and easily passes through a space in a network, whereas the droplet, which is heavy, cannot rapidly change its flow path and deviates from the flow path of the discharged vapor and collides with the demister. The droplet, which collides with the demister, attaches to the demister due to surface tension, gradually aggregates and coarsens, and runs down the demister and again joins up with a liquid phase.

The condenser 3 condenses the discharged vapor washed by the scrubber 2. The condenser 3 here used may be a reflux condenser. The condenser 3 flocculates the discharged vapor washed in the scrubber 2, to recover the hydroxyaryl compound. The condenser 3 is connected with a circulation flow path 31, to supply a portion of a condensed liquid into a flocculator. Thus, a portion of the condensed liquid is circulated in the condenser 3, thereby washing the inside of the condenser 3.

The supply path 4 allows at least a portion of the bottom liquid of the scrubber to be supplied to the polymerization reactor 1. The supply path 4 has a transfer pump 41. Although not illustrated, the supply path 4 may have a flow rate regulation valve. At least a portion of the bottom liquid of the scrubber can be supplied to the polymerization reactor 1, thereby recycling the dihydroxy compound and the diaryl carbonate included in the bottom liquid, to result in a reduction in amount of loss of a starting material.

The apparatus for producing a polycarbonate may include a supply path 5 through which the bottom liquid of the condenser 3 is supplied as the washing liquid in the scrubber 2. The supply path 5 can be included, to reutilize the hydroxyaryl compound obtained in the flocculator 3, as the washing liquid.

A supply path 6 allows the bottom liquid of the scrubber to be again supplied as the washing liquid to the scrubber 2. Although not illustrated, the supply path 6 may have a flow rate regulation valve. At least a portion of the bottom liquid of the scrubber can be reutilized as the washing liquid in the scrubber 2, thereby recycling the dihydroxy compound and the diaryl carbonate, to result in a reduction in amount of loss of a starting material.

The material of a pipe or the like of the apparatus for producing a polycarbonate is not particularly limited, and is usually selected from metal materials such as those respectively made of stainless steel, carbon steel, hastelloy, nickel, titanium, chromium, and any other alloy, and any polymer material high in heat resistance. The surface of such a material may be, if necessary, variously treated by plating, lining, passivation treatment, acid washing, phenol washing, or the like. Preferred is stainless steel, nickel, glass lining, or the like, and particularly preferred is stainless steel. A discharge pump used for a molten polycarbonate, or a polycarbonate is usually preferably a gear pump capable of quantitatively discharging a high-viscosity substance, and the material of such a gear may be stainless steel or any other special metal.

The polymerization reactor to be used may be a single polymerization reactor, or can also be a combination of two or more polymerization reactors.

Figure 2 is a schematic configuration diagram of an apparatus for producing a polycarbonate according to another embodiment. Any configuration of the apparatus for producing a polycarbonate according to another embodiment, which is common with the above embodiment, is marked with the same symbol and the description thereof is omitted. The apparatus for producing a polycarbonate includes two of such polymerization reactors. Any configuration of the second polymerization reactor, which is common with the configuration of the first polymerization reactor, is marked with the same symbol, and the symbol is indicated with being marked with "'" in order to distinguish the apparatus configuration of the second polymerization reactor, and the description of such any configuration is omitted.

Subsequently, the method for producing a polycarbonate according to the present embodiment is described with, as an example, the case of use of the above apparatus for producing a polycarbonate.

### <Polymerization step>

In the polymerization step, a dihydroxy compound and a diaryl carbonate, or a prepolymer thereof is polymerized in a polymerization reactor.

### (Dihydroxy compound)

Examples of the dihydroxy compound include an aromatic dihydroxy compound and an aliphatic dihydroxy compound.

The aromatic dihydroxy compound is, for example, a compound represented by the following formula:

HO-Ar-OH

wherein Ar represents a divalent aromatic group.

The divalent aromatic group is, for example, a group represented by the following formula:

-Ar¹-Y-Ar²-

wherein Ar¹ and Ar² each independently represent a divalent carbocyclic or heterocyclic aromatic group having 5 to 70 carbon atoms, and Y represents a divalent alkylene group having 1 to 30 carbon atoms.

Each of Ar¹ and Ar², which is a divalent aromatic group, may be one in which one or more hydrogen atoms are each substituted with any other substituent having no adverse effect on any reaction, for example, a halogen atom, an alkyl group having 1 to 10 carbon atoms, an alkoxy group having 1 to 10 carbon atoms, a phenyl group, a phenoxy group, a vinyl group, a cyano group, an ester group, an amide group, or a nitro group. Preferred specific examples of the heterocyclic aromatic group include an aromatic group having one or a plurality of ring-forming nitrogen atoms, oxygen atoms or sulfur atoms. Each of Ar¹ and Ar², which is a divalent aromatic group, represents, for example, a group such as substituted or non-substituted phenylene, substituted or non-substituted biphenylene, or substituted or non-substituted bilidilene. The substituent here is as described above.

Examples of the divalent alkylene group Y include groups represented by the following formulae.

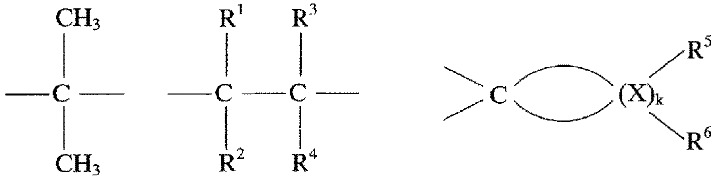

In the formulae, R¹, R², R³, and R⁴ each independently represent hydrogen, an alkyl group having 1 to 10 carbon atoms, an alkoxy group having 1 to 10 carbon atoms, a cycloalkyl group having 5 to 10 ring-constituting carbon atoms, a carbocyclic aromatic group having 5 to 10 ring-constituting carbon atoms, or a carbocyclic aralkyl group having 6 to 10 carbon atoms. k represents an integer of 3 to 11, R⁵ and R⁶ are individually selected with respect to each X and mutually independently represent hydrogen or an alkyl group having 1 to 6 carbon atoms, and X represents carbon. Each of R¹, R², R³, R⁴, R⁵ and R⁶ may also be one in which one or more hydrogen atoms are each substituted with any other substituent such as a halogen atom, an alkyl group having 1 to 10 carbon atoms, an alkoxy group having 1 to 10 carbon atoms, a phenyl group, a vinyl group, a cyano group, an ester group, an amide group, or a nitro group as long as such any other substituent has no adverse effect on any reaction.

Examples of such a divalent aromatic group Ar include groups represented by the following formulae.

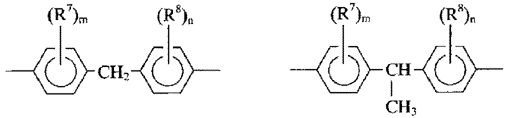

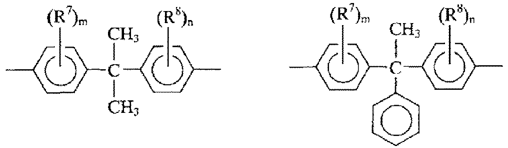

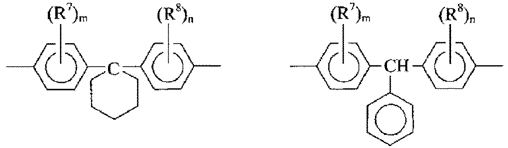

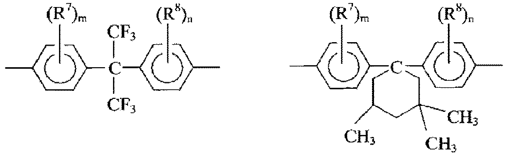

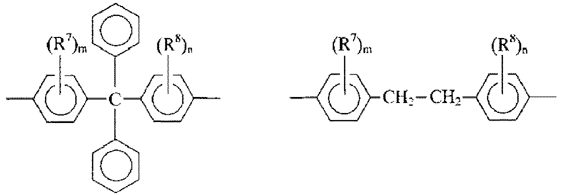

In the formulae, R⁷ and R⁸ each independently represent a hydrogen atom, a halogen atom, an alkyl group having 1 to 10 carbon atoms, an alkoxy group having 1 to 10 carbon atoms, a cycloalkyl group having 5 to 10 ring-constituting carbon atoms, or a phenyl group. m and n are each an integer of 1 to 4, and, when m is 2 to 4, each R⁷ may be the same or different and, when n is 2 to 4, each R⁸ may be the same or different.

The divalent aromatic group Ar may be a group represented by the following formula:

-Ar¹-Z-Ar²-

wherein Ar¹ and Ar² are as described above, Z represents a single bond, or a divalent group such as -O-, -CO-, - S-, -SO₂-, -SO-, -COO- or -CON(R¹)-, provided that R¹ is as described above.

Examples of such a divalent aromatic group Ar include groups represented by the following formulae.

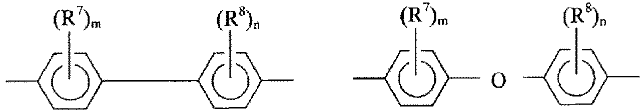

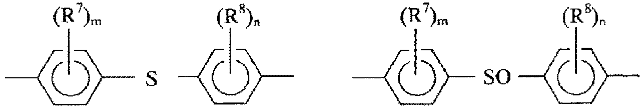

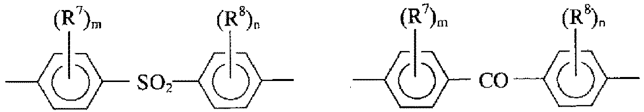

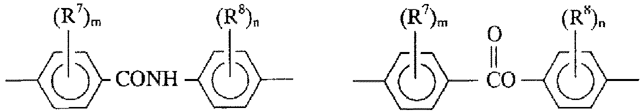

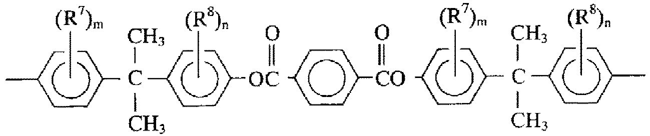

In the formulae, R⁷, R⁸, m and n are as described above.

Specific examples of the divalent aromatic group Ar include substituted or non-substituted phenylene, substituted or non-substituted naphthylene, and substituted or non-substituted pyridylene.

The aromatic dihydroxy compound may be adopted singly or in combinations of two or more kinds thereof.

Among these aromatic dihydroxy compounds, bisphenol A is preferable. Such bisphenol A here used is preferably a high-purity product for polycarbonate, in which the content of chlorine is 1 ppb or less.

A trivalent aromatic trihydroxy compound for introduction of a branched structure may also be used in combination.

### (Diaryl carbonate)

The diaryl carbonate is preferably a compound represented by the following formula: 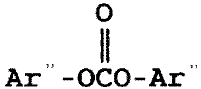 wherein each Ar'' represents a monovalent aromatic group having 5 to 20 carbon atoms.

Examples of the monovalent aromatic group include a phenyl group, a methylphenyl group, a dimethylphenyl group, a trimethylphenyl group, an ethylphenyl group, a diethylphenyl group, a triethylphenyl group, a butylphenyl group, a dibutylphenyl group, and a tributylphenyl group.

These diaryl carbonates may be used singly or in combinations of two or more kinds thereof.

Among these diaryl carbonates, a symmetric diaryl carbonate such as a lower-alkyl-substituted diphenyl carbonate, for example, non-substituted diphenyl carbonate, ditolyl carbonate, or di-t-butylphenyl carbonate is preferable, and, in particular, diphenyl carbonate which is a diaryl carbonate having the simplest structure is suitable. These diaryl carbonates may be used singly or in combinations of two or more kinds thereof. Such diphenyl carbonate is preferably used in combination with bisphenol A as a hydroxy compound from the viewpoint of recovery of the dihydroxy compound from the vapor discharged from the polymerization reactor and thus a reduction in amount of loss.

Such diphenyl carbonate is not particularly limited, and one is preferably used which is produced from dimethyl carbonate and phenol by a reaction distillation method, such dimethyl carbonate being produced by reaction of ethylene carbonate produced by reaction of ethylene oxide with CO₂, with methanol.

Such diphenyl carbonate is preferably a superhigh-purity product not containing any alkali metal, alkaline earth metal and chlorine.

The use ratio (loading ratio) between the dihydroxy compound and the diaryl carbonate differs depending on the types of the aromatic dihydroxy compound and the diaryl carbonate used, the polymerization temperature, and other polymerization conditions, and the diaryl carbonate is used at a ratio of usually 0.9 to 2.5 mol, preferably 0.95 to 2.0 mol, more preferably 0.98 to 1.5 mol based on 1 mol of the aromatic dihydroxy compound.

A prepolymer may be used as a starting material in the method for producing a polycarbonate according to the present embodiment. The prepolymer is a condensate of the dihydroxy compound and the diaryl carbonate. The use ratio (loading ratio) therebetween is the same as the above use ratio (loading ratio) between the dihydroxy compound and the diaryl carbonate. The average degree of polymerization of the prepolymer is not particularly limited, and is, for example, 2 to 2,000.

### (Catalyst)

The polymerization step can be carried out without addition of any catalyst, and may be carried out in the presence of a catalyst in order to increase the polymerization rate. The catalyst is not particularly limited, and examples include hydroxides of alkali metals and alkaline earth metals, such as lithium hydroxide, sodium hydroxide, potassium hydroxide, and calcium hydroxide; alkali metal salts, alkaline earth metal salts, and quaternary ammonium salts of hydrides of boron and/or aluminum, such as lithium aluminum hydride, sodium boron hydride, and tetramethylammonium borohydride; hydrogen compounds of alkali metals and alkaline earth metals, such as lithium hydride, sodium hydride, and calcium hydride; alkoxides of alkali metals and alkaline earth metals, such as lithium methoxide, sodium ethoxide, and calcium methoxide; aryloxides of alkali metals and alkaline earth metals, such as lithium phenoxide, sodium phenoxide, magnesium phenoxide, LiO-Ar-OLi, and NaO-Ar-Ona (Ar is an aryl group); organic acid salts of alkali metals and alkaline earth metals, such as lithium acetate, calcium acetate, and sodium benzoate; zinc compounds such as zinc oxide, zinc acetate, and zinc phenoxide; boron oxide, boric acid, sodium borate, trimethyl borate, tributyl borate, and triphenyl borate, as well as compounds of tin, for example, tin oxide, and tin compounds and organotin compounds each bound with an alkoxy group or an aryloxy group, such as dialkyltin oxide, dialkyltin carboxylate, tin acetate, and ethyltin tributoxide; compounds of lead, such as lead oxide, lead acetate, lead carbonate, basic carbonate, and alkoxide or aryloxide of lead and organolead; and quaternary ammonium salts and quaternary phosphonium salts. These catalysts may be used singly or in combinations of two or more kinds thereof.

The amount of the catalyst used is in a range of usually 10⁻¹⁰ to 1% by mass, preferably 10⁻⁹ to 10⁻¹% by mass, further preferably 10⁻⁸ to 10⁻²% by mass relative to the dihydroxy compound as a starting material.

The starting material used in the polymerization step is preferably a mixture molten and mixed at usually 100°C to 250°C, preferably 140°C to 200°C. The reaction of the dihydroxy compound and the diaryl carbonate partially progresses depending on melting and mixing conditions. The reaction rate of the dihydroxy compound in the molten mixture is not particularly limited, and is in a range of usually 0.001 to 95%, preferably 20 to 85%.

It is preferable in the polymerization step to polymerize the dihydroxy compound and the diaryl carbonate and thus produce a polycarbonate having a number average molecular weight of 5000 or less. This range can be set, to properly keep the reaction pressure in the polymerization reactor, indicated with respect to the polymerization step, and use an inert gas in an appropriate range without any extreme increase in amount of the inert gas shared. The number average molecular weight of the polycarbonate produced is preferably 350 to 4000.

The temperature of the polymerization reactor is preferably 120 to 320°C, more preferably 160 to 300°C, further preferably 180 to 280°C.

While an aromatic monohydroxy compound is produced according to progression of reaction, this compound is distilled off in the form of a vapor, introduced to and condensed in a condenser, and thereafter removed outside of the reaction system, thereby resulting in an increase in reaction rate. While the reaction pressure in the polymerization reactor differs depending on the type and molecular weight of a polycarbonate to be produced, the polymerization temperature, and the like, the reaction pressure is, for example, in a range of usually 670 Pa (5 mmHg) to normal pressure in the case of a number average molecular weight of 1500 or less, or is 4000 Pa (30 mmHg) or less in the case of a number average molecular weight of 1500 to 5000, when a polycarbonate is produced from a molten mixture of bisphenol A and diphenyl carbonate. As described above, a lowered reaction pressure increases foaming in a polymerization tank, and thus a pressure of 2670 Pa (20 mmHg) or more is particularly preferable. A method is also preferably used in which reaction is performed under reduced pressure with the above inert gas being introduced.

The hydroxyaryl compound distilled off from the polymerization reactor can contain a compound higher in boiling point than the relevant compound, for example, the dihydroxy compound, due to splash entrainment. In the present embodiment, a washing step of washing a vapor with a scrubber is provided between such polymerization reaction step and condensation step in order to reduce splash entrainment of the dihydroxy compound in the hydroxyaryl compound.

### <Washing step>

In the washing step, a discharged vapor containing the hydroxyaryl compound, the diaryl carbonate and the dihydroxy compound, discharged from the polymerization reactor in the polymerization step, is contacted with a washing liquid in a scrubber. The discharged vapor can be contacted, to separate the diaryl carbonate and the dihydroxy compound from the discharged vapor, and recover these from the bottom of the scrubber.

### (Washing liquid)

The washing liquid is not particularly limited, and is preferably a liquid composition with a diaryl carbonate as a main component. The "main component" is a component whose proportion is more than 50% by mass. The diaryl carbonate is preferably the same compound as the diaryl carbonate used in the polymerization step.

The washing liquid may include a dihydroxy compound. The dihydroxy compound is preferably the same compound as the dihydroxy compound used in the polymerization step. The content of the dihydroxy compound is not particularly limited, and may be 1 to 50% by mass, 3 to 40% by mass, or 5 to 30% by mass.

The washing liquid may include a hydroxyaryl compound. The hydroxyaryl compound is preferably a hydroxyaryl compound detached from the diaryl carbonate used in the polymerization step, due to polymerization. The content of the hydroxyaryl compound is not particularly limited, and may be 1 to 40% by mass, 3 to 30% by mass, or 5 to 20% by mass.

At least a portion of a condensed liquid of the discharged vapor, in a condensation step described below, may be used as the washing liquid in the washing step. The flocculated liquid can be used as the washing liquid, to decrease the temperature of the washing liquid and efficiently recover the diaryl carbonate and the dihydroxy compound.

The mass ratio of a liquid supplied as the washing liquid toward the washing step, in a condensed liquid from a condensation step, is preferably 0.1 or more and 1 or less, more preferably 0.2 or more and 0.7 or less, further preferably 0.2 or more and 0.5 or less based on the amount of the discharged vapor at an inlet for the washing step. The amount of the discharged vapor at an inlet for the washing step means the amount of the discharged vapor introduced into the scrubber.

The bottom liquid of the scrubber in the washing step is preferably supplied toward the washing step and used again as the washing liquid. The bottom liquid include each component in the washing liquid, and the hydroxyaryl compound, the diaryl carbonate and the dihydroxy compound recovered from the discharged vapor. The bottom liquid of the scrubber in the washing step can be reutilized as the washing liquid, to not only effectively use resources, but also efficiently recover the diaryl carbonate and the dihydroxy compound.

The mass ratio of a liquid supplied as the washing liquid toward the washing step, in the bottom liquid of the scrubber in the washing step, is preferably 0.1 or more and 10 or less, more preferably 0.5 or more and 7 or less, further preferably 1 or more and 5 or less based on the amount of the discharged vapor at an inlet for the washing step. The amount of the discharged vapor at an inlet for the washing step means the amount of the discharged vapor introduced into the scrubber.

### (Bottom liquid)

The bottom liquid of the scrubber in the washing step is a liquid composition in which the washing liquid is contacted with the discharged vapor and accumulated on the bottom of the scrubber. The content of the diaryl carbonate in the bottom liquid is preferably 20% by mass to 90% by mass, more preferably 40% by mass to 90% by mass, further preferably 60% by mass to 90% by mass.

The scrubber in the washing step is preferably provided with an irregular packing material. The discharged vapor can be contacted with the washing liquid with being allowed to pass through the irregular packing material in the washing step, thereby increasing the rates of recovery of the diaryl carbonate and the dihydroxy compound in the discharged vapor and more remarkably reducing the amount of loss of the dihydroxy compound.

In the washing step, a droplet corresponding to a splash entrainment content is preferably separated by a demister. The discharged vapor may include a droplet corresponding to a splash entrainment content after contact thereof with the washing liquid. The droplet corresponding to a splash entrainment content also includes the diaryl carbonate and the dihydroxy compound, and the droplet can be separated by a demister, thereby increasing the rates of recovery of these compounds.

The space ratio in the demister is preferably 95% by volume to 99% by volume, more preferably 97% by volume to 99% by volume, further preferably 98% by volume to 99% by volume. The "space ratio in the demister" refers to the proportion of the volume of the space to the total volume of the demister.

In a condensation step, the discharged vapor washed in the washing step is condensed. The discharged vapor washed in the washing step includes the hydroxyaryl compound, and is condensed to a liquid in the condensation step. The production method according to the present embodiment includes the washing step and therefore the diaryl carbonate and the dihydroxy compound that can be reutilized in polymerization reaction are separated from the discharged vapor, and thus the amounts of loss of these compounds can be reduced. A high-purity hydroxyaryl compound is also obtained in the condensation step, and therefore a liquid composition to be easily reutilized in, for example, diaryl carbonate production is obtained.

In the method for producing a polycarbonate according to the present embodiment, at least a portion of the bottom liquid of the scrubber in the washing step is supplied to the polymerization reactor. Thus, the diaryl carbonate and the dihydroxy compound recovered in the washing step can be reutilized in the polymerization step, resulting in an increase in efficiency of use of a starting material.

The above steps may be sequentially performed, and are preferably continuously simultaneously performed.

The polycarbonate produced in the apparatus for producing a polycarbonate may be sent to a post-polymerization step described below, to produce a high-molecular-weight polycarbonate.

### <Post-polymerization step>

In the post-polymerization step, the polycarbonate obtained in the polymerization step is further polymerized to produce a polycarbonate higher in degree of polymerization.

The number average molecular weight of the polycarbonate produced in the post-polymerization step is usually 500 to 100000, preferably 2000 to 30000. The polymerization reactor used in the post-polymerization step is not particularly limited, and is preferably a polymerization reactor having a large area for evaporating, for example, a hydroxyaryl compound as a by-product. Specifically, for example, a thin-film polymerization reactor, a centrifugal thin-film evaporation polymerization reactor, a surface renewal type twin-screw kneading polymerization reactor, a twin-screw horizontal stirring polymerization reactor, a wetted-wall type polymerization reactor, a perforated plate type polymerization reactor in which polymerization is made with free fall, or a polymerization reactor in which a polymer is molten and dropped along with a support to allow polymerization to progress, for example, a perforated plate type polymerization reactor provided with a wire is used, and any of these is used singly or a combination of these polymerization reactors is used. In the post-polymerization step, polymerization may be made with a plurality of the above production apparatuses linked. In the post-polymerization step, it is preferable to melt and drop a polymer along with a support and thus allow polymerization to progress.

The reaction pressure in the post-polymerization step is usually 2670 Pa (20 mmHg) or less, preferably 1330 Pa (10 mmHg) or less, more preferably 670 Pa (5 mmHg) or less. In a case where a high-molecular-weight polycarbonate is produced, the reaction pressure in the post-polymerization step is preferably 267 Pa (2 mmHg) or less.

The reaction temperature in the post-polymerization step is selected from a range of usually 50 to 350°C, preferably 100 to 290°C.

When a polycarbonate is produced in the apparatus for producing a polycarbonate of the present embodiment, for example, a known catalyst deactivator described in International Publication No**.** WO 2005/121213 may be used. The amount of the catalyst deactivator used is preferably a proportion of 0.5 to 50 mol, more preferably a proportion of 0.5 to 10 mol, further preferably a proportion of 0.8 to 5 mol, per mol of a transesterification catalyst. The catalyst deactivator is added in, for example, an extruder.

### (Polycarbonate)

The polycarbonate obtained by the method for producing a polycarbonate according to the present embodiment has, for example, a repeating unit represented by the following formula: 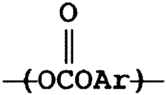 wherein Ar is as defined above.

The polycarbonate is preferably a polycarbonate containing 85% by mol or more of a repeating unit represented by the following formula, in the entire repeating unit.

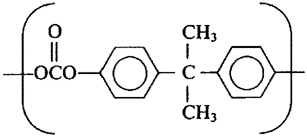

A terminal group of the polycarbonate is usually a hydroxy group, or an aryl carbonate group represented by the following formula: 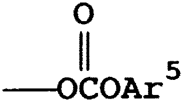 wherein Ar⁵ is defined as in Ar'' described above.

The ratio between the hydroxy group and the aryl carbonate group is not particularly limited, and is usually in a range of 95:5 to 5:95, preferably in a range of 90:10 to 10:90, further preferably in a range of 80:20 to 20:80. A preferable polycarbonate is one in which the proportion of the phenyl carbonate group in the terminal group is 85% by mol or more.

The polycarbonate may be one which is constituted by including a plurality of polycarbonate main chains, in which such a plurality of polycarbonate main chains is, as a whole, bound with at least one side chain via one branch selected from the group consisting of an ester bond and an ether bond, and thus partially branched.

### [Recovery method]

The method for producing a polycarbonate according to the present embodiment is described above. The method for producing a polycarbonate according to the present embodiment is also a method for recovering a dihydroxy compound, in terms of another aspect.

A method for recovering a dihydroxy compound according to the present embodiment includes
a washing step of contacting a discharged vapor containing a hydroxyaryl compound, a diaryl carbonate and a dihydroxy compound, discharged from a polymerization reactor that polymerizes the dihydroxy compound and the diaryl carbonate, or any prepolymer thereof, with a washing liquid in a scrubber, and
a condensation step of condensing the discharged vapor washed in the washing step.

According to the recovery method according to the present embodiment, a dihydroxy compound from a vapor discharged from a polymerization reactor can be recovered to reduce the amount of loss of the dihydroxy compound.

The washing step and the condensation step are as described above, and thus the description thereof is omitted.

### Examples

Hereinafter, the present embodiment is more specifically described with reference to Examples, but the present embodiment is not limited to the following Examples.

### [Example 1]

An apparatus illustrated in Figure 2 was used.

The dihydroxy compound used was bisphenol-A (BPA), and the diaryl carbonate used was diphenyl carbonate (DPC). A polymerization reactor 1 was operated at 220°C/70 mmHg. The material used in a scrubber 2 was stainless steel, and the number of theoretical stages was one.

A process vapor from the polymerization reactor 1 at the former stage was introduced at a flow rate of 8900 kg/hour into the bottom portion of the scrubber 2. The washing liquid used in the scrubber 2 was diaryl carbonate. A process vapor from the top of the scrubber 2 was introduced at 10650 kg/hour into a condenser 3**.** The flow rate of a process liquid from the bottom portion of the scrubber 2 was 16250 kg/hour, and the mass ratio of DPC in the compositional ratio of the process liquid was 80% by weight. The process liquid at a flow rate of 250 kg/hour in the above flow rate was introduced into the polymerization reactor 1, and that at a flow rate of 16000 kg/hour in the above flow rate was again introduced as the washing liquid into the top of the scrubber 2**.** The flow rate of a process liquid at the bottom portion of the condenser 3 was 10650 kg/hour, and the process liquid at a flow rate of 8650 kg/hour in the above flow rate was drawn out and the process liquid at a flow rate of 2000 kg/hour in the above flow rate was introduced again as the washing liquid into the top of the scrubber 2. The process liquid drawn out in the condenser 3 had a BPA concentration of 20 ppm by mass. It has been found from the foregoing results that the amount of loss of the dihydroxy compound can be reduced.

A polymerization reactor 1' at the latter stage was operated at 270°C/32 mmHg. The material used in a scrubber 2' was stainless steel, and the number of theoretical stages was one.

A process vapor from the polymerization reactor 1' was introduced at a flow rate of 1380 kg/hour into the bottom portion of the scrubber 2'. A process vapor from the top of the scrubber 2' was introduced at a flow rate of 1830 kg/hour into a condenser 3'. The flow rate of a process liquid at the bottom portion of the scrubber 2' was 4050 kg/hour, and the mass ratio of DPC in the compositional ratio of the process liquid was 90%. The process liquid at a flow rate of 50 kg/hour in the above flow rate was introduced into the polymerization reactor 1' and the process liquid at a flow rate of 4000 kg/hour in the above flow rate was introduced again as the washing liquid into the top of the scrubber 2'. The flow rate of a process liquid at the bottom portion of the condenser 3' was 1830 kg/hour, and the process liquid at a flow rate of 1330 kg/hour in the above flow rate was drawn out and the process liquid at a flow rate of 500 kg/hour in the above flow rate was introduced again as the washing liquid into the top of the scrubber 2'. The process liquid drawn out in the condenser 3' had a BPA concentration of 40 ppm by mass. It has been found from the foregoing results that the amount of loss of the dihydroxy compound can be reduced.

### [Example 2]

An apparatus illustrated in Figure 1 was used.

The dihydroxy compound used was bisphenol-A (BPA), and the diaryl carbonate used was diphenyl carbonate (DPC). A polymerization reactor 1 was operated at 220°C/70 mmHg. The material used in a scrubber 2 was stainless steel, and the number of theoretical stages was one.

A process vapor from the polymerization reactor 1 at the former stage was introduced at a flow rate of 8670 kg/hour into the bottom portion of the scrubber 2. A process vapor from the top of the scrubber 2 was introduced at 9850 kg/hour into the condenser 3. The flow rate of a process liquid from the bottom portion of the scrubber 2 was 2820 kg/hour, and the content of DPC in the compositional ratio of the process liquid was 30 % by weight. The process liquid at a flow rate of 20 kg/hour in the above flow rate was introduced into the polymerization reactor 1 and the process liquid at a flow rate of 2800 kg/hour in the above flow rate was introduced again as the washing liquid into the top of the scrubber 2. The flow rate of a process liquid at the bottom portion of the condenser 3 was 9850 kg/hour, and the process liquid at a flow rate of 8650 kg/hour in the above flow rate was drawn out and the process liquid at a flow rate of 1200 kg/hour in the above flow rate was introduced again as the washing liquid into the top of the scrubber 2. The process liquid drawn out in the condenser 3 had a BPA concentration of 2000 ppm by mass. It has been found from the foregoing results that the amount of loss of the dihydroxy compound can be reduced.

A polymerization reactor 1' at the latter stage was operated at 270°C/32 mmHg. The material used in a scrubber 2' was stainless steel, and the number of theoretical stages was one.

A process vapor from the polymerization reactor 1' was introduced at a flow rate of 1340 kg/hour into the bottom portion of the scrubber 2'. A process vapor from the top of the scrubber 2' was introduced at a flow rate of 1660 kg/hour into a condenser 3'. The flow rate of a process liquid at the bottom portion of the scrubber 2' was 710 kg/hour, and the mass ratio of DPC in the compositional ratio of the process liquid was 20%. The process liquid at a flow rate of 10 kg/hour in the above flow rate was introduced into the polymerization reactor 1' and the process liquid at a flow rate of 700 kg/hour in the above flow rate was introduced again as the washing liquid into the top of the scrubber 2'. The flow rate of a process liquid at the bottom portion of the condenser 3' was 1660 kg/hour, and the process liquid at a flow rate of 1330 kg/hour in the above flow rate was drawn out and the process liquid at a flow rate of 330 kg/hour in the above flow rate was introduced again as the washing liquid into the top of the scrubber 2'. The process liquid drawn out in the condenser 3' had a BPA concentration of 4000 ppm by mass. It has been found from the foregoing results that the amount of loss of the dihydroxy compound can be reduced.

### [Example 3]

An apparatus illustrated in Figure 1 was used.

The dihydroxy compound used was bisphenol-A (BPA), and the diaryl carbonate used was diphenyl carbonate (DPC). A polymerization reactor 1 was operated at 220°C/70 mmHg. The material used in a scrubber 2 was stainless steel, and the number of theoretical stages was one.

A process vapor from the polymerization reactor 1 was introduced at a flow rate of 10500 kg/hour into the bottom portion of the scrubber 2. A process vapor from the top of the scrubber 2 was introduced at a flow rate of 12650 kg/hour into a condenser 3. The flow rate of a process liquid at the bottom portion of the scrubber 2 was 33850 kg/hour, and the mass ratio of DPC in the compositional ratio of the process liquid was 60%. The process liquid at a flow rate of 1850 kg/hour in the above flow rate was introduced into the polymerization reactor 1 and the process liquid at a flow rate of 32000 kg/hour in the above flow rate was introduced again as the washing liquid into the top of the scrubber 2. The flow rate of a process liquid at the bottom portion of the condenser 3 was 12650 kg/hour, and the process liquid at a flow rate of 8650 kg/hour in the above flow rate was drawn out and the process liquid at a flow rate of 4000 kg/hour in the above flow rate was introduced again as the washing liquid into the top of the scrubber 2. The process liquid drawn out in the condenser 3 had a BPA concentration of 1 ppm by mass. It has been found from the foregoing results that the amount of loss of the dihydroxy compound can be reduced.

A polymerization reactor 1' was operated at 270°C/32 mmHg. The material used in a scrubber 2' was stainless steel, and the number of theoretical stages was one.

A process vapor from the polymerization reactor 1' was introduced at a flow rate of 1560 kg/hour into the bottom portion of the scrubber 2'. A process vapor from the top of the scrubber 2' was introduced at a flow rate of 2030 kg/hour into a condenser 3'. The flow rate of a process liquid at the bottom portion of the scrubber 2' was 8230 kg/hour, and the mass ratio of DPC in the compositional ratio of the process liquid was 90%. The process liquid at a flow rate of 230 kg/hour in the above flow rate was introduced into the polymerization reactor 1' and the process liquid at a flow rate of 8000 kg/hour in the above flow rate was introduced again as the washing liquid into the top of the scrubber 5. The flow rate of a process liquid at the bottom portion of the condenser 3' was 2030 kg/hour, and the process liquid at a flow rate of 1330 kg/hour in the above flow rate was drawn out and the process liquid at a flow rate of 700 kg/hour in the above flow rate was introduced again as the washing liquid into the top of the scrubber 2'. The process liquid drawn out in the condenser 3' had a BPA concentration of 5 ppm by mass. It has been found from the foregoing results that the amount of loss of the dihydroxy compound can be reduced.

### [Comparative Example 1]

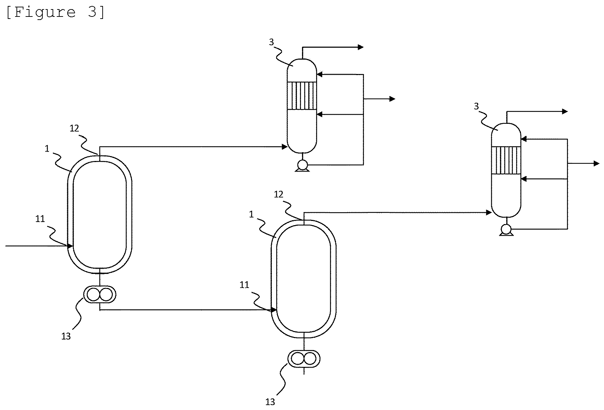

An apparatus illustrated in Figure 3 was used. The apparatus illustrated in Figure 3 is an apparatus not having a scrubber 2, and the configuration thereof, common with that of the apparatus for producing a polycarbonate according to the present embodiment, is marked with the same symbol, and the description thereof is omitted.

The dihydroxy compound used was BPA and the diaryl carbonate used was DPC. A polymerization reactor 1 was operated at 220°C/70 mmHg. The polymerization reactor 1 was operated at 270°C/32 mmHg.

A process vapor was introduced at a flow rate of 8650 kg/hour into a condenser 3. The flow rate of a process liquid at the bottom portion of the condenser 3 was 8650 kg/hour, and a process liquid drawn out had a BPA concentration of 4000 ppm by mass.

A process vapor was introduced at a flow rate of 1330 kg/hour into a condenser 3'. The flow rate of a process liquid at the bottom portion of the condenser 3' was 1330 kg/hour, and a process liquid drawn out had a BPA concentration of 9000 ppm by mass.

### Industrial Applicability

The method for producing a polycarbonate according to the present embodiment has industrial applicability in the production field of polycarbonate.

### Reference Signs List

1, 1' polymerization reactor
2, 2' scrubber
3, 3' condenser
4, 4', 5, 5', 6, 6' supply path
13, 13' discharge pump
22, 22' packing material
25, 25' demister

## Claims

1. A method for producing a polycarbonate, comprising
a polymerization step of polymerizing a dihydroxy compound and a diaryl carbonate, or a prepolymer thereof in a polymerization reactor,
a washing step of contacting a discharged vapor containing the hydroxyaryl compound, the diaryl carbonate and the dihydroxy compound, discharged from the polymerization reactor in the polymerization step, with a washing liquid in a scrubber, and
a condensation step of condensing the discharged vapor washed in the washing step, wherein
at least a portion of a bottom liquid of the scrubber in the washing step is supplied to the polymerization reactor.

2. The method for producing a polycarbonate according to claim 1, wherein at least a portion of a condensed liquid of the discharged vapor in the condensation step is used as the washing liquid in the washing step.

3. The method for producing a polycarbonate according to claim 2, wherein a mass ratio of a liquid supplied as the washing liquid toward the washing step, in the condensed liquid from the condensation step, is 0.1 or more and 1 or less based on an amount of the discharged vapor at an inlet for the washing step.

4. The method for producing a polycarbonate according to claim 1, wherein the bottom liquid of the scrubber in the washing step is supplied as the washing liquid toward the washing step.

5. The method for producing a polycarbonate according to claim 4, wherein a mass ratio of a liquid supplied as the washing liquid toward the washing step, in the bottom liquid of the scrubber in the washing step, is 0.1 or more and 10 or less based on an amount of the discharged vapor at an inlet for the washing step.

6. The method for producing a polycarbonate according to claim 1, wherein a content of the diaryl carbonate in the bottom liquid of the scrubber in the washing step is 20% by mass to 90% by mass.

7. The method for producing a polycarbonate according to any one of claims 1 to 6, wherein the scrubber in the washing step is provided with an irregular packing material.

8. The method for producing a polycarbonate according to any one of claims 1 to 6, wherein a droplet corresponding to a splash entrainment content is separated by a demister in the washing step.

9. The method for producing a polycarbonate according to claim 8, wherein a space ratio in the demister is 95% by volume to 99% by volume.

10. The method for producing a polycarbonate according to claim 1, wherein the dihydroxy compound comprises diphenyl carbonate.

11. The method for producing a polycarbonate according to claim 10, wherein the diaryl carbonate comprises bisphenol A.

12. A method for recovering a dihydroxy compound, comprising
a washing step of contacting a discharged vapor containing a hydroxyaryl compound, a diaryl carbonate and a dihydroxy compound, discharged from a polymerization reactor that polymerizes the dihydroxy compound and the diaryl carbonate, or any prepolymer thereof, with a washing liquid in a scrubber, and
a condensation step of condensing the discharged vapor washed in the washing step.

13. An apparatus for producing a polycarbonate, comprising
a polymerization reactor that polymerizes a dihydroxy compound and a diaryl carbonate, or a prepolymer thereof,
a scrubber that brings a discharged vapor containing a hydroxyaryl compound, a diaryl carbonate and a dihydroxy compound, discharged from the polymerization reactor, into contact with a washing liquid, and
a condenser that condenses the discharged vapor washed by the scrubber, and
a supply path that allows at least a portion of a bottom liquid of the scrubber to be supplied to the polymerization reactor.
